# EUROPÄISCHE PATENTSCHRIFT

(11) **EP 3 630 347 B1**
(45) Veröffentlichungstag und Bekanntmachung des Hinweises auf die Patenterteilung: **24.02.2021**
(21) Anmeldenummer: 18727303.2
(22) Anmeldetag: 29.05.2018
(51) Int. Cl.: B01J 8/44

(54) **WIRBELBODEN SOWIE APPARAT ENTHALTEND EINEN SOLCHEN WIRBELBODEN**
FLUIDIZING PLATE AND APPARATUS COMPRISING A FLUIDIZING PLATE OF SAID TYPE
FOND DE FLUIDISATION AINSI QU'APPAREIL CONTENANT UN TEL FOND DE FLUIDISATION

(30) Priorität: 31.05.2017 EP 17173627
(43) Veröffentlichungstag der Anmeldung: 08.04.2020
(73) Patentinhaber: BASF SE, 67056 Ludwigshafen am Rhein (DE)
(72) Erfinder: STEPHAN, Oskar, 67056 Ludwigshafen (DE); GIESE, Reiner, 67056 Ludwigshafen (DE); SCHMIDT, Egon, 67056 Ludwigshafen (DE); FREIBERG, Juergen, 67056 Ludwigshafen (DE); VOLL, Norbert Eugen, 67056 Ludwigshafen (DE); LAIBLE, Michael, 67056 Ludwigshafen (DE)
(74) Vertreter: BASF IP Association
(86) Internationale Anmeldenummer: PCT/EP2018/064014
(87) Internationale Veröffentlichungsnummer: WO 2018/219914

(56) Entgegenhaltungen:
- US-A- 2 944 009
- US-A- 3 621 627
- US-A- 4 300 458

## Beschreibung

Die Erfindung geht aus von einem Wirbelboden, umfassend eine Tragstruktur und Bodensegmente, wobei die Bodensegmente jeweils Öffnungen aufweisen, durch die im Betrieb Gas strömt. Die Erfindung betrifft weiterhin einen Apparat enthaltend einen solchen Wirbelboden.

Wirbelböden finden Einsatz in allen Apparaten, in denen eine Wirbelschicht oder ein Fließbett enthalten ist. Hierbei befindet sich auf dem Wirbelboden ein pulverförmiges oder granulatförmiges Material, das fluidisiert wird, indem ein Gas durch Öffnungen des Wirbelbodens von unten in das pulverförmige oder granulatförmige Material eingeleitet wird.

Aufgrund der Größe von üblichen Anlagen, in denen Wirbelschichten eingesetzt werden, werden die Wirbelböden üblicherweise aus einzelnen Bodensegmenten aufgebaut, wobei die Bodensegmente zur Ausbildung des Wirbelbodens miteinander verschweißt werden. Um eine ausreichende Stabilität des Wirbelbodens zu erhalten, werden die Bodensegmente üblicherweise zusätzlich auf einer Tragstruktur befestigt, wobei hier die Befestigung ebenfalls zum Beispiel durch Verschweißen oder alternativ auch durch Vernieten erfolgt. Der gesamte Boden aus Tragstruktur und Bodensegmenten wird dann in der Regel auf eine Tragkonstruktion im Apparat aufgesetzt. Durch das Verschweißen der einzelnen Bodensegmente können Verspannungen im Boden auftreten. Zudem kann es zu Verzug kommen, wodurch sich Verformungen ergeben, die beispielsweise am Rand des Bodens zu Undichtigkeiten führen können, die anschließend aufwändig abgedichtet werden müssen. Des Weiteren können die Verspannungen in den einzelnen Bodensegmenten auch dazu führen, dass sich die Verbindung mit der Tragkonstruktion löst. Bei einer Verbindung der Bodensegmente mit der Tragkonstruktion durch Nieten ist es hierbei weiterhin möglich, dass die Nieten brechen und auf diese Weise das pulverförmige oder granulatförmige Material durch entsprechende Metallteile verunreinigt wird.

Ein weiterer Nachteil der Schweißverbindungen ist, dass ein möglicher notwendiger Austausch von Bodensegmenten, zum Beispiel bei Beschädigungen oder aufgrund von Abnutzung im laufenden Betrieb, aufwendig ist. In diesem Fall ist es notwendig, zunächst das Bodensegment abzutrennen und anschließend ein neues Bodensegment einzupassen. Hierzu ist es erforderlich, eine große Anzahl an passgenauen Bodensegmenten oder sogar vollständige Ersatzböden zu bevorraten, um lange Anlagenstillstandszeiten zu vermeiden. Sollten entsprechende Bodensegmente nicht bevorratet sein, wäre es ansonsten nämlich erforderlich, die Anlage stillstehen zu lassen bis ein entsprechendes Ersatzteil gefertigt ist.

Ein weiteres Problem beim Austausch von einzelnen Bodensegmenten ergibt sich dadurch, dass aufgrund der Schweißverbindungen Verspannungen auftreten, die ausgeglichen werden müssen. So kann es zum Beispiel erforderlich sein, für die Demontage zusätzliche Werkzeuge wie Hydraulikpressen einzusetzen.

Ein weiteres Problem kann sich dadurch ergeben, dass durch betriebsbedingte Vibrationen und montagebedingte Verspannungen die Schweißnähte, mit denen die Bodensegmente zum Wirbelboden zusammengefügt sind, anfällig für Rissbildungen sind. Die entsprechenden Risse geben dann wiederum Anlass für Anlagenstillstandszeiten, um die notwendigen Reparaturen durchführen zu können.

Ein segmentierter Wirbelboden ist zum Beispiel aus DE-A 100 51 008 bekannt. Hierbei werden die einzelnen Bodensegmente mit Halteelementen, die am Rand der Bodensegmente angebracht sind, miteinander verbunden, so dass eine Dehnungsfuge gebildet wird. In die Dehnungsfuge wird ein elastisches Material eingelegt, um zu verhindern, dass Material aus der Wirbelschicht an den Verbindungsstellen durchfallen kann.

Ein Wirbelboden für einen Fließbettapparat, der in mehrere Wirbelbodensegmente unterteilt ist, ist in DD-A 300 694 beschrieben. Nachteil der beschriebenen Wirbelböden ist jedoch, dass diese nur für kleinere Apparate geeignet sind. In großen Apparaten, die für die Stabilität des Wirbelbodens eine zusätzliche Tragkonstruktion erfordern, können die entsprechenden Böden nicht eingesetzt werden. US-A-4 300 458 offenbart eine Tragstruktur und Bodensegmente.

Aufgabe der vorliegenden Erfindung war es daher, einen Wirbelboden bereitzustellen, der einen einfachen Austausch von Bodensegmenten und eine einfache Montage erlaubt, bei dem keine montagebedingten Verspannungen auftreten und der auch in großen Anlagen eingesetzt werden kann.

Gelöst wird die Aufgabe durch einen Wirbelboden, umfassend eine Tragstruktur und Bodensegmente, wobei die Bodensegmente jeweils Öffnungen aufweisen, durch die im Betrieb Gas strömt, wobei die Bodensegmente jeweils mit der Tragstruktur lösbar verbunden werden und jeweils zwei benachbarte Bodensegmente überlappen und lösbar im Bereich der Überlappung miteinander verbunden werden.

Die Öffnungen in den Bodensegmenten sind vorzugsweise so gestaltet, dass auch dann, wenn die Wirbelschicht nicht in Betrieb ist und damit kein Gas durch den Wirbelboden geleitet wird, kein Material aus der Wirbelschicht durch die Öffnungen fallen kann. Hierzu können entweder Hauben über den Öffnungen angebracht sein und/oder die maximale Öffnungsweite ist kleiner als der Durchmesser der Partikel des Wirbelmaterials. Besonders bevorzugt werden CONIDUR ®-Bleche als Material für die Bodensegmente eingesetzt.

Die Konstruktion derart, dass die Bodensegmente lösbar mit der Tragstruktur verbunden werden, erlaubt einen einfachen Austausch, da lediglich die Verbindung gelöst werden muss, um ein entsprechendes Bodensegment zu entnehmen. Die Überlappung von zwei benachbarten Bodensegmenten erlaubt eine Fertigung mit größeren Produktionstoleranzen, da die einzelnen Bodensegmente nicht gegeneinander stoßen, was bei großen Maßtoleranzen zu Verspannungen im Boden führen könnte. Zudem hat die lösbare Verbindung den weiteren Vorteil, dass Spannungen, wie sie zum Beispiel durch Schweißverbindungen erzeugt werden, vermieden werden. Insbesondere erfolgt keine Verformung der Bodensegmente, wie dies aufgrund der Hitzeeinwirkung beim Schweißen erfolgen kann.

Ein weiterer Vorteil der lösbar mit der Tragstruktur verbundenen Bodensegmente ist, dass diese standardisiert geformt werden können und so bei Schädigung eines einzelnen Bodensegmentes ein neues Bodensegment eingesetzt werden kann. Dies erlaubt einen schnellen Austausch, da anders als bei miteinander verschweißten Bodensegmenten das Herausschneiden des beschädigten Bodenabschnittes nicht jedes Mal zu unterschiedlich geformten Bodensegmenten führt. Zudem kann durch die Überlappung der Bodensegmente eine Maßungenauigkeit bei der Montage ausgeglichen werden.

Besonders vorteilhaft ist es, wenn ein Großteil der Bodensegmente die gleiche Form aufweist, da dies die Lagerhaltung für Bodensegmente reduziert und nur ein geringerer Anteil an Bodensegmenten bevorratet werden muss, um im Bedarfsfall, d.h. bei Schädigung des Bodens, einen Austausch vornehmen zu können.

Die lösbare Verbindung mit der Tragstruktur hat zudem den Vorteil, dass bei einer Schädigung von Bodensegmenten die Unterkonstruktion bei der Demontage nicht geschädigt wird und somit eine Neuanfertigung der Unterkonstruktion nicht erforderlich ist. Die überlappenden Verbindungen erlauben es zudem, Fertigungsmaschinen zur Herstellung der Böden, zum Beispiel CNC-Maschinen, gezielt einzusetzen. Hierzu können die Fertigungszeichnungen der einzelnen Bauteile des Wirbelbodens in den CNC-Maschinen gespeichert werden, wodurch die Bauteile exakt identisch reproduzierbar sind. Dies gewährleistet auch eine Maßhaltigkeit der Austauschteile des Wirbelbodens.

Durch die lösbare Verbindung der einzelnen Bodensegmente ist es des Weiteren auch nicht erforderlich, die einzelnen Bodensegmente durch seitliche Verschraubungen am Stützrahmen gegeneinander zu verspannen. Diese Verspannung der einzelnen Bodensegmente führt bei Wirbelböden, die nach dem üblichen Verfahren hergestellt werden, zu Wölbungen der Oberfläche des Bodens.

Für den Austausch von Bodensegmenten war es bislang erforderlich, den gesamten Boden samt Unterkonstruktion, das heißt der Tragstruktur, zu demontieren und neu anzufertigen. Durch die erfindungsgemäße Gestaltung mit lösbarer Verbindung der Bodensegmente mit der Tragstruktur ist es auf einfache Weise möglich, mögliche defekte Bodensegmente auszubauen und auszutauschen. Dies führt auch zu einer erheblichen Reduktion der Demontage und Montagezeiten.

Als lösbare Verbindung eignet sich jede dem Fachmann bekannte lösbare Verbindung. Besonders geeignet sind dabei Klemmverbindungen oder Verschraubungen. Wenn Verschraubungen eingesetzt werden, ist es für eine einfache Montage und Demontage der Bodensegmente vorteilhaft, wenn in der Tragstruktur Gewinde ausgebildet sind, in die die Schrauben für die Verschraubung eingeschraubt werden können. Hierdurch ist ein Zugang lediglich von oben auf den Wirbelboden erforderlich, um einzelne Bodensegmente zu lösen oder zu montieren. Da die für das Einbringen der Gewinde notwendigen Bohrungen jedoch zu einer Verringerung der Stabilität der Tragstruktur führen können, ist es bevorzugt, wenn die lösbare Verbindung eine Klemmverbindung ist.

Weiterhin ist es bevorzugt, wenn die Bodensegmente so gestaltet sind, dass diese jeweils am Rand mit der Tragstruktur verbunden sind. In diesem Fall befinden sich die Überlappungen von zwei Bodensegmenten jeweils oberhalb der Tragstruktur, so dass eine Befestigung der Bodensegmente mit der Tragstruktur auf einfache Weise erfolgen kann, indem nämlich zum Beispiel eine Schraube durch Schraubenlöcher in den überlappenden Bodensegmenten geführt wird und in einem Gewinde in der Tragstruktur unterhalb der sich überlappenden Bodensegmente eingeschraubt wird oder vorzugsweise das Bodensegment mit einer Klemmverbindung an der Tragstruktur befestigt wird. Bei einer Gestaltung derart, dass der Überlappungsbereich von zwei Bodensegmenten nicht oberhalb der Tragstruktur liegt und einer Befestigung mit einer Verschraubung, wäre es ansonsten erforderlich, dass zur Verbindung der Bodensegmente entweder in dem untenliegenden Bodensegment ein Gewinde ausgebildet ist, um die Bodensegmente miteinander verschrauben zu können, oder alternativ Muttern genutzt werden, um die Verschraubung zu realisieren. In diesem Fall wäre jedoch sowohl bei der Montage als auch bei der Demontage notwendig, dass ein Zugang sowohl von oben als auch von unten möglich ist. Bei üblichen Wirbelschichtapparaten würde dies dazu führen, dass zum Austausch von Bodensegmenten zwei Mitarbeiter erforderlich sind, wobei einer unterhalb des Wirbelbodens und einer oberhalb des Wirbelbodens eingesetzt wird, damit die jeweiligen Verschraubungen gelöst werden können. Daher ist es bevorzugt, wenn die Form der Bodensegmente an die Form der Tragstruktur so angepasst ist, dass die Bodensegmente jeweils an den Rändern mit der Tragstruktur verbunden werden.

Um zu verhindern, dass Gas im Bereich der Überlappung zwischen den Bodensegmenten austritt und nicht durch die Öffnungen im Boden geleitet wird, ist es weiterhin bevorzugt, wenn im Bereich der Überlappung zwischen den sich überlappenden Bodensegmenten ein Dichtelement eingelegt ist. Als Dichtelement eignet sich zum Beispiel eine Dichtschnur. Als Material für das Dichtelement kann jedes geeignete Material für Dichtelemente genutzt werden. Besonders bevorzugt ist das Dichtelement aus Polytetrafluorethylen.

Durch den Aufbau mit Tragstruktur und sich überlappenden Bodensegmenten im Bereich der Tragstruktur weist der Boden Bereiche auf, die nicht von Gas durchströmt werden können. Um eine gleichmäßige Gasströmung zu erhalten, sind in einer bevorzugten Ausführungsform Löcher in der Tragstruktur und in den sich überlappenden Bodensegmenten ausgebildet, wobei die Löcher in der Tragstruktur und in den Bodensegmenten nach Montage fluchtend übereinander angeordnet sind, so dass das nach oben strömende Gas durch die Löcher in der Tragstruktur und den Bodensegmenten strömen kann.

Die Tragstruktur, auf der die einzelnen Bodensegmente befestigt werden, kann zum Beispiel aus Doppel-T-Trägern aufgebaut sein. Alternativ ist es auch möglich, beliebige andere Profile zum Aufbau der Tragstruktur einzusetzen. Hierbei ist die Tragstruktur üblicherweise in Form eines Fachwerkes ausgebildet, auf dem dann die einzelnen Bodensegmente befestigt werden. Insbesondere bei einem Aufbau der Tragstruktur wie sie bislang auch eingesetzt wird, indem zwei U-Profile oder alternativ auch zwei L-Profile miteinander verschraubt werden, bildet sich üblicherweise aufgrund der Radien vom Übergang von einem Schenkel zum um 90 ° gekippten Schenkel eine Nut, in die bei verschweißten Bodensegmenten Partikel gelangen können und sich dort ablagern. Durch die überlappende Montage der Bodensegmente und das Einlegen von Dichtschnüren wird verhindert, dass Produkt in entsprechende Leerräume gelangen kann. Zudem ist es auch möglich, Dichtschnüre in die entsprechenden Leerräume einzulegen, und auf diese Weise zu verhindern, dass sich Produkt aus der Wirbelschicht ablagern kann.

Um des Weiteren zu verhindern, dass bei verschraubten Bodensegmenten Verspannungen aufgrund von Temperaturschwankungen auftreten, ist es weiterhin bevorzugt, wenn die Löcher, durch die die Befestigungselemente, insbesondere Schrauben, geführt werden, einen größeren Durchmesser aufweisen als der Schraubenschaft. Dies erlaubt eine Bewegung der Bodensegmente im Bereich der Befestigungen, durch die Verspannungen ausgeglichen werden können.

Alternativ zu einer Gestaltung der Tragstruktur aus einzelnen Profilen, ist es auch möglich, die Tragstruktur aus Streben aufzubauen, die ineinander gesteckt sind. Hierzu ist es zum Beispiel möglich, eine Wabenstruktur zu bilden, auf der die einzelnen Bodensegmente befestigt werden. Anders als eine Tragstruktur aus einzelnen Profilen kann jedoch gegebenenfalls ein höherer Druckverlust auftreten, da eine größere Anzahl an Streben eingesetzt wird und an den einzelnen Streben vorzugsweise jeweils Laschen ausgebildet sind, an denen die Bodensegmente befestigt werden können. Vorteil einer solchen Tragstruktur aus ineinander gesteckten Streben ist, dass ein äußerer Stützrahmen der Tragstruktur nicht mehr notwendig ist. Hierdurch entfällt ein weiteres Bauteil, das zu Verspannungen im Boden führen kann.

Ein weiterer Vorteil der ineinander gesteckten Streben zur Bildung der Tragstruktur ist, dass der Spalt zwischen den einzelnen Profilen, wie er bei einer herkömmlichen Tragstruktur entsteht, entfällt und somit Produktablagerungen zwischen den einzelnen Segmenten nicht mehr möglich sind.

In einer bevorzugten Ausführungsform ist die Tragstruktur an den Segmentgrenzen, das heißt an den Rändern der Bodensegmente aus durchgehenden Streben aufgebaut und innerhalb der einzelnen Segmente aus ineinandergesteckten Streben, die jeweils an den durchgehenden Streben enden und mit den durchgehenden Streben verbunden sind. Vorzugsweise weisen die durchgehenden Streben Löcher auf, die fluchtend mit den Löchern im Bodensegment angeordnet sind, so dass im Betrieb Gas durch die durchgehenden Streben und die darauf befestigten Bodensegmente strömen kann. Durchgehende Streben bedeutet in diesem Fall, dass die Streben so lang sind, dass diese sich entlang der Segmentgrenzen von mindestens zwei benachbarten Segmenten erstrecken. Bevorzugt erstrecken sich die durchgehenden Streben von Rand zu Rand des Bodens. Bei einem Aufbau des Bodens aus mehreren Abschnitten, wobei jeder Abschnitt wiederum mehrere Bodensegmente umfasst, erstrecken sich die durchgehenden Streben vorzugsweise von Rand zu Rand des Abschnitts. In einer besonders bevorzugten Ausführungsform sind durchgehende Streben vorgesehen, die sich in einem rechten Winkel schneiden, so dass die einzelnen Bodensegmente zumindest einen rechten Winkel aufweisen.

Aufgrund der Größe des Wirbelbodens kann es notwendig sein, zusätzliche Aussteifungen an der Tragstruktur vorzusehen. Durch die zusätzlichen Aussteifungen wird ein Durchbiegen des Wirbelbodens aufgrund hoher Windlast verhindert oder zumindest reduziert.

Um zu verhindern, dass bei verschraubten Bodensegmenten an herausstehenden Schraubenköpfen Produktanhaftungen und damit Schäden auftreten können, ist es weiterhin vorteilhaft, wenn an den Positionen der Verschraubungen die Bodensegmente eine Vertiefung aufweisen, so dass nach dem Verschrauben kein Schraubenkopf über die Oberfläche der Bodensegmente hinausragt. Hierdurch wird eine im Wesentlichen ebene Oberfläche des Wirbelbodens erzielt und Unebenheiten, die zu Produktanhaftungen führen können, werden vermieden.

Weiterhin ist es möglich, die Verschraubungsstellen jeweils so zu gestalten, dass an diesen jeweils eine Öffnung ausgebildet ist, in die ein Einsatz eingelegt wird, wobei der Einsatz als Hülse mit Bördelkante ausgebildet, die Bördelkante nach Einlegen des Einsatzes in die Öffnung auf dem Bodensegment aufliegt und im Einsatz ein Loch ausgebildet ist, durch das eine Schraube geführt ist. Die Verwendung eines solchen Einsatzes hat insbesondere den Vorteil, dass die Konstruktion aus Tragstruktur und Bodensegment im Verhältnis zur Tragkonstruktion in einem Wirbelschichtapparat, auf dem der Wirbelboden aufliegt, nivellierbar ist, so dass zum Beispiel auch bei durchhängender Tragkonstruktion im Apparat eine ebene Bodenoberfläche erzielt werden kann. Hierzu ist es zum Beispiel möglich, entsprechend geformte Einsätze einzusetzen oder alternativ Nivellierscheiben oder Hülsen zu verwenden, die in Verbindung mit dem Einsatz genutzt werden.

Des Weiteren ist es möglich, durch entsprechende Gestaltung der Einsätze und der Öffnung, in die der Einsatz eingelegt ist, eine Verschiebbarkeit der Böden sicherzustellen, so dass Verspannungen, zum Beispiel durch Wärmeausdehnungen, verhindert werden. Hierzu wird die Öffnung im Boden mit einem größeren Durchmesser gestaltet als der Einsatz und die Bördelkante weist ihrerseits einen Durchmesser auf, der so viel größer ist als der Durchmesser der Öffnung im Boden, dass die Bördelkante immer auf dem Boden aufliegt, auch wenn der Einsatz an einer Stelle der Öffnung anliegt. Das bedeutet, dass die Summe des Durchmessers der Hülse des Einsatzes und der Breite der Bördelkante größer ist als der Durchmesser der Öffnung, in die der Einsatz eingesetzt ist. Um eine ausreichende Verschiebbarkeit des Bodens zu erzielen, ist es dabei bevorzugt, wenn der Außendurchmesser der Hülse des Einsatzes 5 bis 20 %, bevorzugt 10 bis 15 %, und insbesondere 10 bis 12 % kleiner ist als der Durchmesser der Öffnung im Bodensegment, durch die der Einsatz geführt ist.

Eingesetzt werden kann ein solcher Wirbelboden in jedem beliebigen Apparat, in dem eine Wirbelschicht erzeugt werden soll. Hierzu enthält der Apparat den Wirbelboden und unterhalb des Wirbelbodens ist eine Gaszufuhr und oberhalb des Wirbelbodens ein Gasauslass angeordnet. Weiterhin umfasst ein solcher Apparat eine Feststoffzufuhr und einen Feststoffauslass.

Um eine gleichmäßige Durchströmung der Wirbelschicht mit dem Gas zu erhalten, ist es weiterhin üblich, dass das Gas über eine sogenannte Windbox zugeführt wird. Hierzu ist unterhalb des Wirbelbodens ein Gasraum ausgebildet, in den das Gas eingeleitet wird. Aus der Windbox strömt das Gas durch die Öffnungen im Wirbelboden in das Wirbelmaterial, das auf dem Wirbelboden aufliegt und bildet die Wirbelschicht, indem das Material, das üblicherweise pulverförmig oder partikelförmig ist, durch das durchströmende Gas aufgewirbelt wird. Da das Gas kontinuierlich das Material auf dem Wirbelboden durchströmt, ist es notwendig, dass das Gas oberhalb der Wirbelschicht aus dem Apparat abgeführt wird. Hierzu ist der Gasauslass oberhalb der Wirbelschicht positioniert. Dabei ist es weiterhin möglich, im Anschluss an den Gasauslass einen Feststoffabscheider, beispielsweise in Form eine Hydrozyklons oder eines Filters, anzubringen, um mit der Gasströmung mitgerissene Feststoffpartikel abzutrennen.

Um weiterhin das zu verwirbelnde Material zuführen und abführen zu können, sind die Feststoffzufuhr und der Feststoffauslass vorgesehen. Dies erlaubt einen kontinuierlichen Feststoffdurchsatz oder alternativ auch einen batchweisen Durchsatz, wobei die Art der Feststoffzugabe und Feststoffentnahme abhängig ist vom Prozess, bei dem die Wirbelschicht eingesetzt wird.

Um eine einfache Zugänglichkeit zum Wirbelboden zu haben und zudem den Apparat so aufzubauen, dass eine Demontage und eine Montage des Wirbelbodens möglich ist, ist im Apparat eine Tragkonstruktion montiert, auf der der Wirbelboden aufliegt. Hierbei liegt der Wirbelboden mit seiner Tragstruktur auf der Tragkonstruktion im Apparat auf. Je nach Zugänglichkeit zum Wirbelboden ist es dabei möglich, für die Montage des Wirbelbodens zunächst die Tragstruktur innerhalb des Apparates auf der Tragkonstruktion zu montieren und anschließend die Bodensegmente anzubringen. Eine solche Montage wird durch den erfindungsgemäßen Boden, bei dem die Tragstruktur und die Bodensegmente jeweils lösbar miteinander verbunden sind, stark vereinfacht. Bei einem ausreichend schweren Boden und ausreichend Material auf dem Wirbelboden kann es ausreichend sein, den Wirbelboden einfach auf die Tragkonstruktion im Apparat aufzulegen. Um zu verhindern, dass der Wirbelboden im laufenden Betrieb beginnt zu schwingen und hierdurch die Tragkonstruktion im Apparat schädigen kann, ist es bevorzugt, wenn die Tragstruktur des Wirbelbodens mit der Tragkonstruktion verbunden wird. Besonders bevorzugt ist es hierbei, die Tragstruktur des Wirbelbodens mit der Tragkonstruktion lösbar zu verbinden, beispielsweise ebenfalls durch Verschraubungen. Diese lösbare Verbindung hat wie auch bei den Verbindungen der einzelnen Bauteile des Bodens untereinander den Vorteil, dass zum Beispiel auftretenden Verformungen durch Verschweißungen verhindert werden. Zudem erlaubt die lösbare Verbindung im Unterschied zu einer Schweißverbindung der Tragstruktur mit der Tragkonstruktion eine Nivellierung des Bodens, die zum Beispiel notwendig ist, wenn die Tragstruktur aufgrund der Abmessungen des Apparates durchhängt oder beim Einbau der Tragkonstruktion in den Apparat Maßabweichungen auftreten. Die Nivellierung erlaubt trotz Maßabweichungen der Tragkonstruktion im Apparat, dass der Wirbelboden eben eingebaut werden kann.

Zur Nivellierung können zum Beispiel Nivellierscheiben eingesetzt werden, die zwischen der Tragkonstruktion und der Tragstruktur eingelegt werden. Hierbei werden die Nivellierscheiben vorzugsweise an den Positionen eingebracht, an denen die Tragstruktur mit der Tragkonstruktion verbunden wird, um zu verhindern, dass die Nivellierscheiben im laufenden Betrieb verrutschen können. Als Nivellierscheiben eignen sich dabei insbesondere Scheiben in Form von Unterlegscheiben, die die eingesetzten Schrauben zur Verbindung der Tragstruktur mit der Tragkonstruktion umschließen. Wenn größere Unebenheiten ausgeglichen werden müssen, können alternativ zu den Nivellierscheiben auch Hülsen eingesetzt werden. Unterschiedliche Abweichungen im Abstand zwischen der Tragstruktur und der Tragkonstruktion oder auch zwischen der Tragstruktur und den Bodensegmenten können durch Einsatz von unterschiedlich vielen Nivellierscheiben an den einzelnen Positionen oder durch Einsatz unterschiedlich dicker Nivellierscheiben ausgeglichen werden.

Ein solcher Apparat kann für jede beliebige Anwendung eingesetzt werden, in der eine Wirbelschicht genutzt wird.

Besonders bevorzugt ist der den Wirbelboden enthaltende Apparat ein Reaktor zur Herstellung von pulverförmigem Poly(meth)acrylat, wobei der Wirbelboden am unteren Ende der Reaktors angeordnet ist, so dass das pulverförmige Poly(meth)acrylat im Betrieb durch den Reaktor auf den Wirbelboden fällt, von unten Gas durch die Gaszufuhr zuführbar ist und so eine Wirbelschicht auf dem Wirbelboden gebildet wird. Die Feststoffzufuhr erfolgt in diesem Fall durch eine Vertropfungseinrichtung, durch die Monomere zugeführt werden, die innerhalb des Reaktors zum Pulver polymerisieren. Ein solcher Reaktor ist zum Beispiel in der WO-A 2011/026876 beschrieben.

Ausführungsformen der Erfindung sind in den Figuren dargestellt und werden in der nachfolgenden Beschreibung näher erläutert.

Es zeigen:
- Figur 1: einen Abschnitt eines Wirbelbodens,
- Figur 2: eine Schnittdarstellung durch eine Tragstruktur mit darauf angebrachten Bodensegmenten,
- Figur 3: einen Ausschnitt einen wabenförmigen Tragstruktur,
- Figur 4: eine 3D-Darstellung eines Ausschnitts der in Figur 3 dargestellten Tragstruktur,
- Figur 5: einen Ausschnitt eines erfindungsgemäßen Bodens in 3D-Darstellung,
- Figur 6: einen Ausschnitt der in Figur 3 dargestellten Tragstruktur in Schnittdarstellung,
- Figur 7: eine Verschraubung eines Bodensegments mit der Tragstruktur,
- Figur 8: eine Befestigung zweier benachbarter Bodensegmente mit der Tragstruktur.

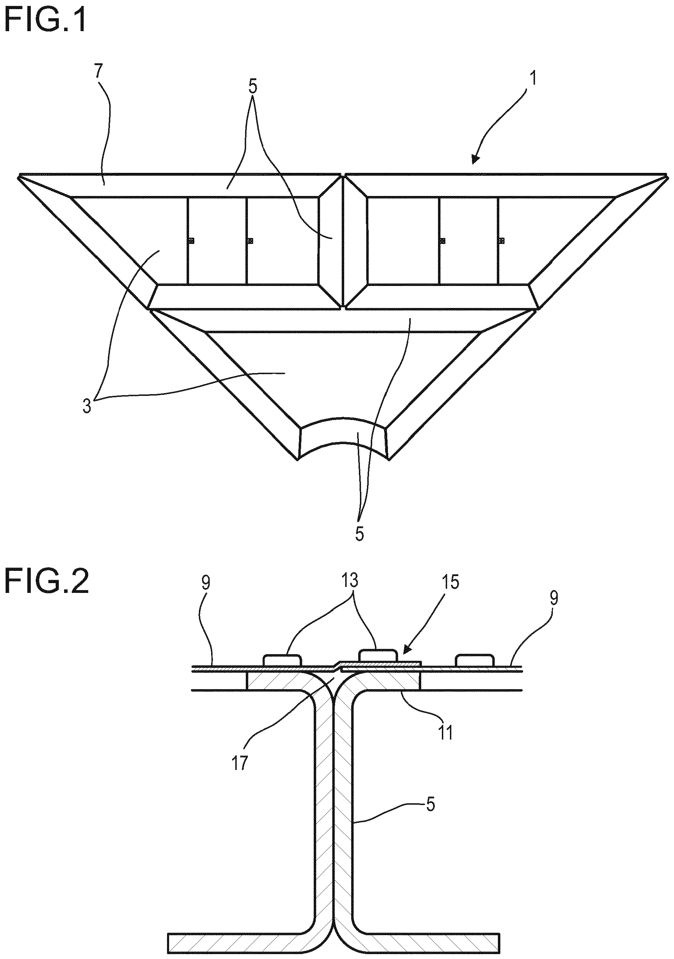

In Figur 1 ist ein Abschnitt eines Wirbelbodens dargestellt.

Ein Wirbelboden 1 ist aus mehreren Segmenten 3 aufgebaut. Hierbei wird jedes Segment von Trägern 5 einer Tragstruktur 7 begrenzt. Auf der Tragstruktur 7 werden Bodensegmente 9 angebracht, wobei die einzelnen Bodensegmente 9 Öffnungen aufweisen, durch die Gas strömen kann. Als Material für die Bodensegmente 9 werden vorzugsweise CONIDUR®-Bleche eingesetzt.

Die einzelnen Träger 5 der Tragstruktur 7 sind zum Beispiel Profilstäbe, die die jeweiligen Segmente 3 umschließen. Hierbei stoßen die einzelnen die jeweiligen Segmente 3 umschließenden Profile aneinander und können miteinander verbunden werden und so die Tragstruktur 7 bilden.

Eine Schnittdarstellung durch die Tragstruktur mit darauf angebrachten Bodensegmenten im Bereich der Verbindung zweier Segmente ist in Figur 2 dargestellt.

Die Träger 5 sind hierbei jeweils als U-Profile ausgebildet, wobei diese so angeordnet sind, dass die Bodensegmente 9 auf einem Schenkel 11 des Trägers 5 aufliegen und jeweils zwei Träger 5 mit der Unterseite des U-Profils aneinander anliegen.

Die Bodensegmente 9 werden lösbar mit den Trägern 5 verbunden. Hierzu werden die Bodensegmente 9 an den Schenkeln 11 der Träger 5 verschraubt. Hierzu werden Schrauben 13 durch Löcher in den Bodensegmenten 9 geführt und in Gewinden in den Schenkeln 11 der Träger 5 verschraubt. Erfindungsgemäß überlappen die Bodensegmente 9 in einem Überlappungsbereich 15. Durch das Überlappen der Bodensegmente 9 im Überlappungsbereich 15 wird zum einen verhindert, dass Material in den Zwischenraum 17 zwischen den Trägern 5 gelangen kann und sich dort ablagert. Ein weiterer Vorteil ist, dass durch die entsprechende Gestaltung der Bodensegmente 9 keine Verspannungen durch Wärmeausdehnung auftreten können. Zudem ist es möglich, die Bodensegmente 9 mit einer größeren Fertigungstoleranz herzustellen.

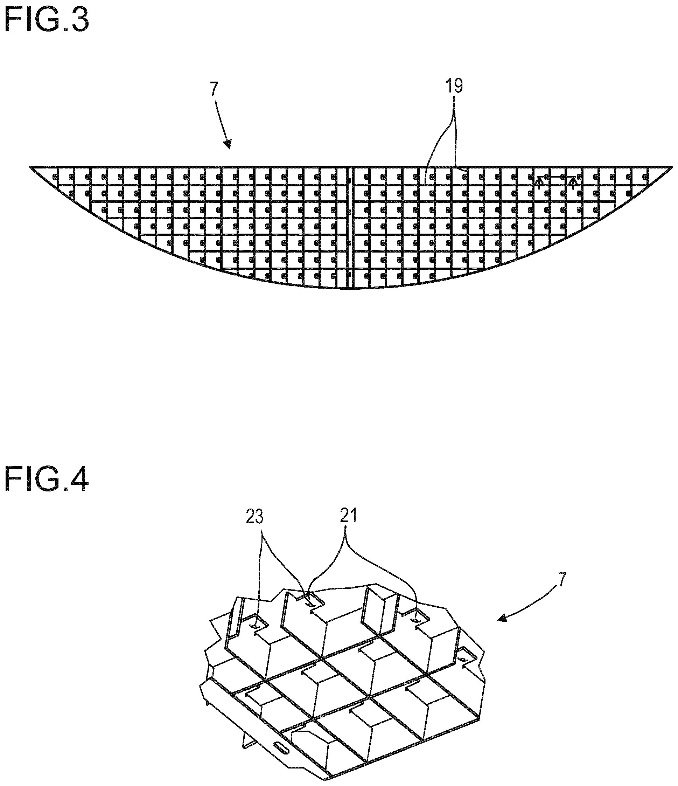

Eine alternative Tragstruktur ist in Figur 3 dargestellt. Bei der in Figur 3 dargestellten Tragstruktur werden einzelne Streben 19 zu einer Wabenstruktur verbunden. Hierbei kann die Wabenstruktur wie in Figur 3 dargestellt quadratische Waben ausbilden oder auch Waben in jeder beliebigen anderen Form. Bevorzugt ist es dabei, dass die Streben 19 lediglich ineinander gesteckt werden und so die Tragstruktur 7 bilden. Das Ineinanderstecken der Streben 19 hat den Vorteil, dass keine Verspannungen durch Verschweißen der einzelnen Streben 19 auftreten können. Zudem erlaubt das Ineinanderstecken der einzelnen Streben eine einfache Montage, die auch innerhalb des Apparates erfolgen kann.

Da der Wirbelboden in einem Wirbelschichtapparat auf eine Trägerkonstruktion aufgelegt wird, wird durch das Zusammenstecken der Streben auch eine ausreichende Festigkeit erzielt. Zudem können die Streben auch mithilfe der mit der Tragstruktur verbundenen Bodensegmente 9 verbunden werden, wodurch die Tragstruktur 7 stabilisiert wird.

In Figur 4 ist ein Ausschnitt der in Figur 3 dargestellten Tragstruktur in 3D-Darstellung gezeigt. Hier lässt sich erkennen, dass die einzelnen Streben 19 Laschen 21 aufweisen, die zu den Streben um 90° gebogen sind. In den Laschen 21 sind Gewinde 23 ausgebildet, in denen die Bodensegmente 9 verschraubt werden.

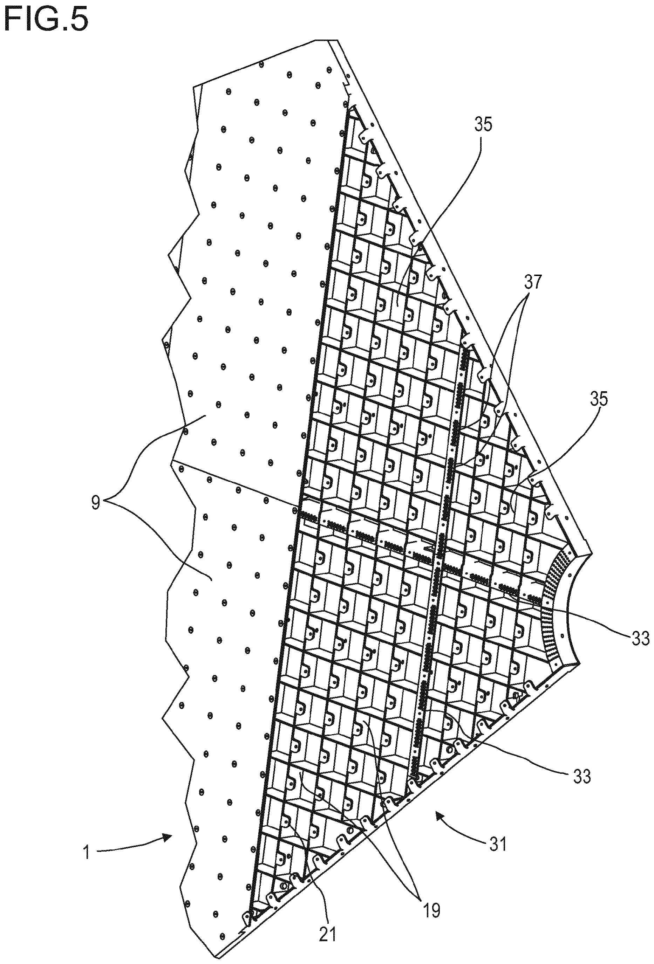

Figur 5 zeigt einen Ausschnitt eines Abschnitts eines Wirbelbodens in dreidimensionaler Darstellung.

Insbesondere bei sehr großen Wirbelböden 1 ist es sinnvoll, diese aus mehreren Abschnitten 31 aufzubauen. Hierbei umfasst ein Abschnitt 31 mehrere Bodensegmente 9. Ein Abschnitt 31 kann zum Beispiel wie in Figur 5 ersichtlich, ein Kreissektor sein. Hierbei ist es bevorzugt, wenn alle Abschnitte 31 gleich aufgebaut sind. Die Anzahl der Abschnitte 31 ist von der Größe des Wirbelbodens 1 abhängig und liegt bevorzugt im Bereich von 2 bis 8. Besonders bevorzugt ist es, 3 bis 6 und insbesondere 4 Abschnitte 31 vorzusehen.

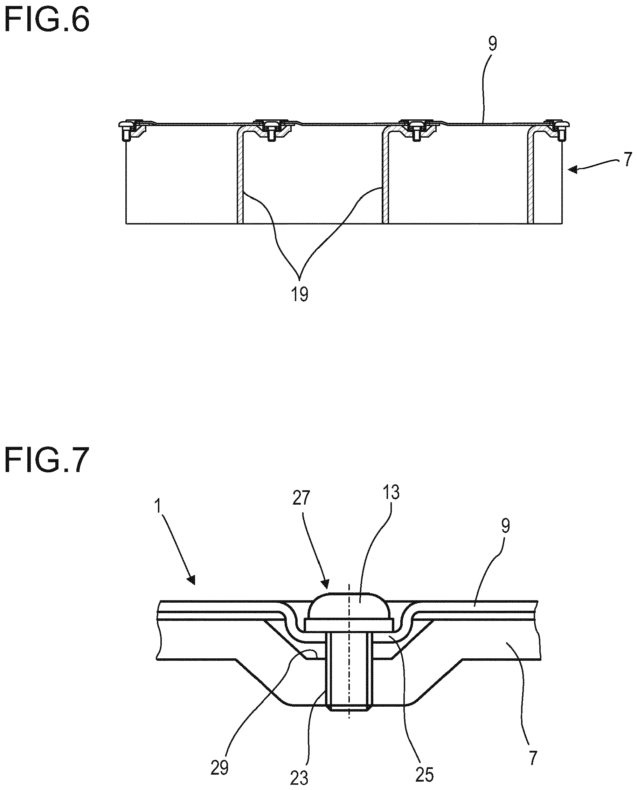

Der hier dargestellte Abschnitt 31 weist eine Tragstruktur 7 mit durchgehenden Streben 33 auf, die jeweils an den Rändern der Bodensegmente 9 angeordnet sind. Hierdurch ergibt sich ein Aufbau des Wirbelbodens, bei dem die Bodensegmente 9 mit ihren Rändern an den durchgehenden Streben 33 befestigt werden. Die Befestigung ist dabei vorzugsweise lösbar durch Verschraubungen oder Klemmverbindungen, besonders bevorzugt durch Klemmverbindungen realisiert. Um zu verhindern, dass Gas zwischen Bodensegmenten 9 durchströmen kann, werden die Bodensegmente 9 im Bereich der durchgehenden Streben 33 überlappend mit den durchgehenden Streben der Tragstruktur verbunden. Mit den durchgehenden Streben werden Segmente 35 begrenzt, die anschließend mit den Bodensegmenten 9 abgedeckt werden. Innerhalb der Segmente 35 weist die Tragstruktur 7 Streben 19 auf, die sich vorzugsweise von einer durchgehenden Strebe 33 bis zur benachbarten durchgehenden Strebe 33 erstrecken oder alternativ vom Rand des Abschnitts 33 oder des Wirbelbodens 1 bis zur nächsten durchgehenden Strebe 33. Die Streben 19 sind vorzugsweise so angeordnet, dass sich diese innerhalb eines Segments 35 kreuzen, wobei die Streben 19 dabei insbesondere, wie vorstehend beschrieben, ineinander gesteckt werden. Zur Befestigung der Bodensegmente 9 weisen die Streben 19 Laschen 21 auf, an denen die Bodensegmente 9 befestigt werden, zum Beispiel durch Verschraubungen, wie beispielhaft in den Figuren 6 und 7 dargestellt.

Um im Bereich der durchgehenden Streben die Gasströmung nicht zu behindern, sind in den durchgehenden Streben 33 Löcher 37 ausgebildet. Diese sind so angeordnet, dass sie mit Löchern in den Bodensegmenten 9 fluchtend sind, so dass Gas durch die Löcher 37 in den durchgehenden Streben 33 und dann durch die Löcher in den Bodensegmenten 9 strömen kann.

Auch bei Einsatz einer Tragstruktur 7, wie sie in den Figuren 3 und 4 dargestellt ist, werden die einzelnen Bodensegmente 9 überlappend mit der Tragstruktur verbunden. Wie die Bodensegmente 9 auf den Streben 19 aufgeschraubt werden, ist beispielhaft in Figur 6 darstellt.

Da nach oben aus den Bodensegmenten herausragende Schraubenköpfen zum einen Ablagerungen des Wirbelmaterials begünstigen können und zum anderen auch durch Abrieb geschädigt werden können, wodurch zum Beispiel Metallabrieb in ein mögliches Produkt gelangen kann, ist es bevorzugt, wenn die Befestigung der Bodensegmente 9 so erfolgt, dass keine Schraubenköpfe über die Oberfläche der Bodensegmente hinausragen. Hierzu ist es zum Beispiel möglich, wie in Figur 7 dargestellt, im Bereich der Verschraubung eine Vertiefung 25 vorzusehen. Da die einzelnen Bodensegmente 9 auf der Tragstruktur 7 aufliegen, ist es dabei vorteilhaft, wenn die Tragstruktur 7 so ausgebildet ist, dass diese im Bereich der Verschraubungen 27 ebenfalls eine Vertiefung 29 aufweisen. In der Vertiefung 29 des Trägers 9 befindet sich das Gewinde 23, in das die Schraube 13 eingeschraubt werden kann. Dadurch ist es möglich, die Schraube im Wirbelboden 1 zu versenken, so dass der Schraubenkopf nicht aus dem Wirbelboden 1 herausragt.

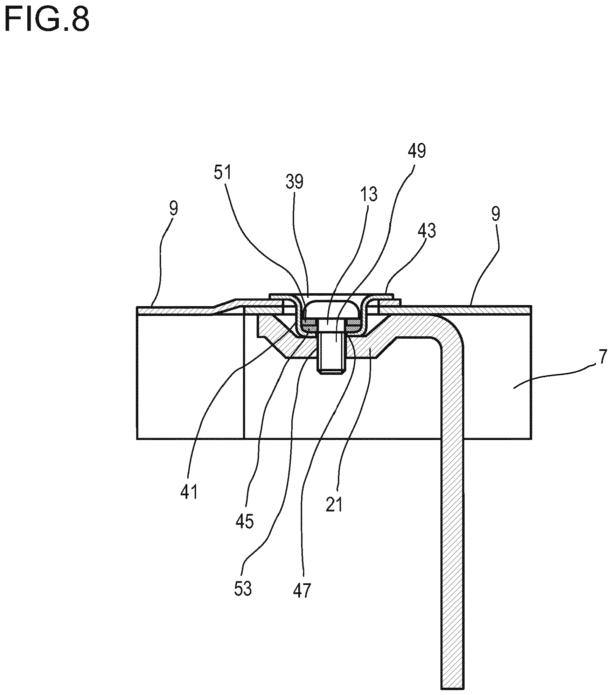

Eine Ausführungsform zur Befestigung zweier benachbarter Bodensegmente mit der Tragstruktur ist beispielhaft in Figur 8 dargestellt.

Wie auch in Figur 2 dargestellt, überlappen die Bodensegmente 9 im Bereich der Befestigung mit der Tragstruktur7. Um die Bodensegmente 9 an der durchgehenden Strebe 33 der Tragstruktur 7 anbringen zu können, weist die durchgehende Strebe 9 eine Lasche 21 auf, die mit einem Innengewinde ausgestattet ist. Wie auch bei der Verschraubung, die in Figur 7 gezeigt ist, ist die Lasche 21 so gestaltet, dass die Verschraubung der Bodensegmente 9 derart erfolgen kann, dass der Schraubenkopf nach Montage der Bodensegmente 9 nicht über die Bodensegmente 9 hinausragt.

Da an den Bodensegmenten aufgrund von Temperaturschwankungen Wärmedehnungen auftreten können, ist die Verschraubung so realisiert, dass eine Verschiebung der Bodensegmente 9 im Bereich der Befestigung möglich ist. Durch die Möglichkeit, dass sich die Bodensegmente im Bereich der Befestigung verschieben können, können Verformungen durch die Wärmedehnungen verhindert werden. Um eine derartige Verschiebbarkeit realisieren zu können weisen die Bodensegmente 9 jeweils Löcher auf, durch die ein Einsatz 39 geführt ist, der als Hülse 41 mit einer Bördelkante 43 ausgeführt ist. Um den Einsatz 39 zur Befestigung der Bodensegmente 9 nutzen zu können, weist die Hülse 41 unten, das heißt an der der Bördelkante 43 gegenüberliegenden Seite einen Boden 45 auf. Im Boden 45 ist ein Loch 47 ausgebildet, durch das ein Befestigungselement, beispielsweise eine Schraube, geführt werden kann. Der Durchmesser des Lochs 47 ist dabei so gewählt, dass das Gewinde 49 der Schraube 13 leicht durchgeführt werden kann, der Schraubenkopf jedoch auf dem Boden 45 aufliegt. Um zu verhindern, dass der Schraubenkopf durch das Loch fällt, ist es alternativ oder zusätzlich auch möglich, geeignete Unterlegscheiben einzusetzen.

Besonders bevorzugt wird als Unterlegscheibe eine Sicherungsscheibe 51 eingesetzt, die ein Lösen der Schraube dauerhaft auch bei starken Schwingungen des Bodens verhindert. eine geeignete Sicherungsscheibe 51 ist zum Beispiel eine Keilsicherungsscheibe.

Für die Montage wird die Schraube 13 in ein entsprechendes Innengewinde 53 in der Lasche 21 eingeschraubt.

Um das Gewinde luftundurchlässig abzudichten wird in einer besonders bevorzugten Ausführungsform die Schraube mit Flüssig-Polytetrafluorethylen bestrichen. Hierdurch wird gleichzeitig ein Festfressen der Schrauben zuverlässig verhindert.

Um mögliche Ungleichmäßigkeiten in der Tragstruktur 7 ausgleichen zu können, ist es in allen hier dargestellten Varianten möglich, im Bereich der Schrauben Nivellierscheiben, beispielsweise in Form von Unterlegscheiben, oder alternativ Nivellierhülsen einzusetzen. Zusätzlich ist es möglich, Nivellierelemente, zum Beispiel in Form von Nivellierscheiben oder Nivellierhülsen, zwischen der Tragstruktur und einer Tragkonstruktion im Apparat, auf der der Wirbelboden aufliegt, vorzusehen.

### Bezugszeichenliste

- 1: Wirbelboden
- 3: Segment
- 5: Träger
- 7: Tragstruktur
- 9: Bodensegment
- 11: Schenkel
- 13: Schraube
- 15: Überlappungsbereich
- 17: Zwischenraum
- 19: Strebe
- 21: Lasche
- 23: Gewinde
- 25: Vertiefung
- 27: Verschraubung
- 29: Vertiefung
- 31: Abschnitt
- 33: durchgehende Strebe
- 35: Segment
- 37: Löcher
- 39: Einsatz
- 41: Hülse
- 43: Bördelkante
- 45: Boden
- 47: Loch
- 49: Gewinde
- 51: Sicherungsscheibe
- 53: Innengewinde

## Patentansprüche

1. Wirbelboden, umfassend eine Tragstruktur (7) und Bodensegmente (9), wobei die Bodensegmente (9) jeweils Öffnungen aufweisen, durch die im Betrieb Gas strömt, **dadurch gekennzeichnet, dass** die Bodensegmente (9) jeweils mit der Tragstruktur (7) lösbar verbunden werden und jeweils zwei benachbarte Bodensegmente (9) überlappen und lösbar im Bereich der Überlappung (15) miteinander verbunden werden.

2. Wirbelboden gemäß Anspruch 1, **dadurch gekennzeichnet, dass** die lösbare Verbindung eine Klemmverbindung ist.

3. Wirbelboden gemäß Anspruch 1 oder 2, **dadurch gekennzeichnet, dass** die Bodensegmente (9) so geformt sind, dass diese jeweils am Rand mit der Tragstruktur (7) verbunden sind.

4. Wirbelboden gemäß Anspruch 3, **dadurch gekennzeichnet, dass** im Bereich der Überlappung (15) zwischen den sich überlappenden Bodensegmenten (9) ein Dichtelement eingelegt ist.

5. Wirbelboden gemäß Anspruch 4, **dadurch gekennzeichnet, dass** das Dichtelement eine Dichtschnur ist.

6. Wirbelboden gemäß Anspruch 4 oder 5, **dadurch gekennzeichnet, dass** das Dichtelement aus Polytetrafluorethylen.

7. Wirbelboden gemäß einem der Ansprüche 1 bis 6, **dadurch gekennzeichnet, dass** die Tragstruktur (7) aus Streben (19) aufgebaut ist, die ineinandergesteckt sind.

8. Wirbelboden gemäß einem der Ansprüche 1 bis 7, **dadurch gekennzeichnet, dass** an den Verschraubungsstellen jeweils eine Öffnung ausgebildet ist, in die ein Einsatz eingelegt wird, wobei der Einsatz als Hülse mit Bördelkante ausgebildet ist, die Bördelkante nach Einlegen des Einsatzes in die Öffnung auf dem Bodensegment aufliegt und im Einsatz ein Loch ausgebildet ist, durch das eine Schraube geführt ist.

9. Wirbelboden gemäß Anspruch 8, **dadurch gekennzeichnet, dass** der Außendurchmesser der Hülse des Einsatzes 5 bis 20 % kleiner ist als der Durchmesser der Öffnung im Bodensegment, durch die der Einsatz geführt ist.

10. Wirbelboden gemäß einem der Ansprüche 1 bis 7, **dadurch gekennzeichnet, dass** an den Positionen der Verschraubungen (27) die Bodensegmente (9) eine Vertiefung (25) aufweisen, so dass nach dem Verschrauben kein Schraubenkopf über die Oberfläche der Bodensegmente (9) hinausragt.

11. Apparat, enthaltend einen Wirbelboden (1) gemäß einem der Ansprüche 1 bis 10, wobei unterhalb des Wirbelbodens (1) eine Gaszufuhr und oberhalb des Wirbelbodens (1) ein Gasauslass angeordnet sind und der Apparat weiterhin eine Feststoffzufuhr und einen Feststoffauslass umfasst.

12. Apparat gemäß Anspruch 11, **dadurch gekennzeichnet, dass** im Apparat eine Tragkonstruktion montiert ist, auf der der Wirbelboden aufliegt.

13. Apparat gemäß Anspruch 12, **dadurch gekennzeichnet, dass** die Tragstruktur (7) des Wirbelbodens lösbar mit der Tragkonstruktion verbunden ist.

14. Apparat gemäß Anspruch 12 oder 13, **dadurch gekennzeichnet, dass** zur Nivellierung des Bodens (1) zwischen der Tragkonstruktion und der Tragstruktur (7) Nivellierscheiben eingesetzt sind.

15. Apparat gemäß einem der Ansprüche 12 bis 14, **dadurch gekennzeichnet, dass** der Apparat ein Reaktor zur Herstellung von pulverförmigem Poly(meth)acrylat ist, wobei der Wirbelboden am unteren Ende des Reaktors angeordnet ist, so dass das pulverförmige Poly(meth)acrylat im Betrieb durch den Reaktor auf den Wirbelboden fällt, von unten Gas durch die Gaszufuhr zuführbar ist und so eine Wirbelschicht auf dem Wirbelboden gebildet wird.

## Claims

1. A fluidizing plate, comprising a supporting structure (7) and plate segments (9), the plate segments (9) respectively having openings through which gas flows during operation, **characterized in that** the plate segments (9) are respectively releasably connected to the supporting structure (7) and two neighboring plate segments (9) respectively overlap and are releasably connected to one another in the region of the overlap (15).

2. The fluidizing plate according to claim 1, **characterized in that** the releasable connection is a clamping connection.

3. The fluidizing plate according to claim 1 or 2, **characterized in that** the plate segments (9) are formed such that they are respectively connected to the supporting structure (7) at the edge.

4. The fluidizing plate according to claim 3, **characterized in that** a sealing element is placed in the region of the overlap (15) between the overlapping plate segments (9).

5. The fluidizing plate according to claim 4, **characterized in that** the sealing element is a sealing cord.

6. The fluidizing plate according to claim 4 or 5, **characterized in that** the sealing element of polytetrafluoroethylene.

7. The fluidizing plate according to one of claims 1 to 6, **characterized in that** the supporting structure (7) is made up of struts (19) that are inserted in one another.

8. The fluidizing plate according to one of claims 1 to 7, **characterized in that** an opening into which an insert is placed is respectively formed at the screwing points, the insert being formed as a sleeve with a flanged edge, the flanged edge resting on the plate segment after the insert has been placed into the opening and a hole through which a screw is passed being formed in the insert.

9. The fluidizing plate according to claim 8, **characterized in that** the outside diameter of the sleeve of the insert is 5 to 20% smaller than the diameter of the opening in the plate segment through which the insert is passed.

10. The fluidizing plate according to one of claims 1 to 7, **characterized in that** the plate segments (9) have a recess (25) at the positions of the screw connections (27), so that after the screwing no screw head protrudes above the surface of the plate segments (9).

11. An apparatus, comprising a fluidizing plate (1) according to one of claims 1 to 10, a gas feed being arranged underneath the fluidizing plate (1) and a gas outlet being arranged above the fluidizing plate (1) and the apparatus also comprising a solid material feed and a solid material outlet.

12. The apparatus according to claim 11, **characterized in that** a supporting construction on which the fluidizing plate rests is assembled in the apparatus.

13. The apparatus according to claim 12, **characterized in that** the supporting structure (7) of the fluidizing plate is releasably connected to the supporting construction.

14. The apparatus according to claim 12 or 13, **characterized in that** leveling shims are inserted for leveling the plate (1) between the supporting construction and the supporting structure (7).

15. The apparatus according to one of claims 12 to 14, **characterized in that** the apparatus is a reactor for producing poly(meth)acrylate in the form of powder, the fluidizing plate being arranged at the lower end of the reactor, so that during operation the poly(meth)acrylate in the form of powder falls through the reactor onto the fluidizing plate, gas can be fed in from below through the gas feed and thus a fluidized bed is formed on the fluidizing plate.

## Revendications

1. Fond de fluidisation, comprenant une structure porteuse (7) et des segments de fond (9), les segments de fond (9) présentant à chaque fois des ouvertures, par lesquelles, en fonctionnement, un gaz s'écoule, **caractérisé en ce que** les segments de fond (9) sont reliés à chaque fois de manière détachable avec la structure porteuse (7) et à chaque fois deux segments de fond (9) voisins se chevauchent et sont reliés l'un à l'autre de manière détachable dans la zone de chevauchement (15) .

2. Fond de fluidisation selon la revendication 1, **caractérisé en ce que** la liaison détachable est une liaison par serrage.

3. Fond de fluidisation selon la revendication 1 ou 2, **caractérisé en ce que** les segments de fond (9) sont formés de telle façon que ceux-ci soient reliés à chaque fois au niveau du bord avec la structure porteuse (7).

4. Fond de fluidisation selon la revendication 3, **caractérisé en ce que** dans la zone de chevauchement (15), un élément d'étanchéité est inséré entre les segments de fond (9) se chevauchant.

5. Fond de fluidisation selon la revendication 4, **caractérisé en ce que** l'élément d'étanchéité est un cordon d'étanchéité.

6. Fond de fluidisation selon la revendication 4 ou 5, **caractérisé en ce que** l'élément d'étanchéité de polytétrafluoroéthylène.

7. Fond de fluidisation selon l'une quelconque des revendications 1 à 6, **caractérisé en ce que** la structure porteuse (7) est composée d'entretoises (19), qui sont imbriquées les unes dans les autres.

8. Fond de fluidisation selon l'une quelconque des revendications 1 à 7, **caractérisé en ce qu'**une ouverture est à chaque fois formée au niveau des emplacements de vissage, dans laquelle un insert est inséré, l'insert étant réalisé sous forme de douille avec une arête de bordage, l'arête de bordage reposant sur le segment de fond après insertion de l'insert dans l'ouverture et un trou étant formé dans l'insert, à travers lequel une vis est guidée.

9. Fond de fluidisation selon la revendication 8, **caractérisé en ce que** le diamètre extérieur de la douille de l'insert est 5 à 20 % plus petit que le diamètre de l'ouverture dans le segment de fond, à travers lequel l'insert est guidé.

10. Fond de fluidisation selon l'une quelconque des revendications 1 à 7, **caractérisé en ce qu'**au niveau des positions des vissages (27), les segments de fond (9) présentent un renfoncement (25), de sorte qu'après le vissage, aucune tête de vis ne dépasse de la surface des segments de fond (9) .

11. Appareil, contenant un fond de fluidisation (1) selon l'une quelconque des revendications 1 à 10, une entrée de gaz étant disposée en dessous du fond de fluidisation (1) et une sortie de gaz étant disposée au-dessus du fond de fluidisation (1) et l'appareil comprenant en outre une entrée de solide et une sortie de solide.

12. Appareil selon la revendication 11, **caractérisé en ce qu'**une construction porteuse est montée dans l'appareil, sur laquelle le fond de fluidisation repose.

13. Appareil selon la revendication 12, **caractérisé en ce que** la structure porteuse (7) du fond de fluidisation est reliée de manière détachable avec la construction porteuse.

14. Appareil selon la revendication 12 ou 13, **caractérisé en ce que** des rondelles de mise à niveau sont insérées entre la construction porteuse et la structure porteuse (7) pour la mise à niveau du fond (1).

15. Appareil selon l'une quelconque des revendications 12 à 14, **caractérisé en ce que** l'appareil est un réacteur pour la préparation de poly(méth)acrylate sous forme de poudre, le fond de fluidisation étant disposé au niveau de l'extrémité inférieure du réacteur, de sorte que le poly(méth)acrylate sous forme de poudre, en fonctionnement, tombe du réacteur sur le fond de fluidisation, du gaz pouvant être introduit par le bas par l'entrée de gaz et ainsi un lit fluidisé étant formé sur le fond de fluidisation.
